# EUROPEAN PATENT SPECIFICATION

(11) **EP 3 069 861 B1**
(45) Date of publication and mention of the grant of the patent: **24.10.2018**
(21) Application number: 13897550.3
(22) Date of filing: 12.11.2013
(51) Int. Cl.: B29C 73/30, B29L 30/00

(54) **MACHINE FOR THE HOT REPAIR OF TYRES**
MASCHINE ZUR HEISSREPARATUR VON REIFEN
MACHINE POUR LA RÉPARATION DE PNEUMATIQUES À CHAUD

(43) Date of publication of application: 21.09.2016
(73) Proprietor: Ibasan S.A., 25310 Agramunt (Lérida) (ES)
(72) Inventor: IBARZ RALUY, Juan, E-25310 Agramunt (Lérida) (ES)
(74) Representative: Herrero & Asociados, S.L.
(86) International application number: PCT/ES2013/070793
(87) International publication number: WO 2015/071504

(56) References cited:
- CA-A- 1 167 214
- CN-U- 203 125 968
- CN-U- 203 125 968
- CN-Y- 201 342 792
- CN-Y- 201 342 792
- ES-A1- 2 335 173
- ES-A1- 2 342 639
- ES-A6- 2 009 585
- ES-U- 281 345
- ES-U- 282 198
- ES-U- 1 061 889
- ES-U- 1 061 889
- FR-E- 62 032
- US-A- 2 318 779
- US-A- 2 464 232
- US-A- 2 814 830

## Description

### OBJECT OF THE INVENTION

The present invention relates to a machine for the hot repair of tyres, applicable mainly to repairing tyres of industrial vehicles, such as trucks, excavators, etc.

The object of the invention is to make a structurally simple machine that is easy to use and affordable, in spite of the fact that its use is sporadic.

### BACKGROUND OF THE INVENTION

Tyres, or covers for wheels of industrial vehicles, are very expensive and, therefore, owners of vehicles with large wheels are forced to extend the useful life of their tyres, which can be dangerous when driving such vehicles on motorways and roads.

The obvious solution to this problem is to repair the tyres before their wear makes them unusable or unsafe, although this requires sophisticated equipment, using different moulds for different types of tyres, which is why machines for repairing tyres are only cost-effective for tyre repair shops since their exclusive function is to repair tyres.

Therefore, purchasing a machine for repairing tyres is not a sensible investment for owners of industrial vehicles due to the cost of the machine and equipment and to the fact that the machine would need to be substituted every time the owner changed the type of tyres that are normally used on such vehicles.

To solve this problem, the utility model 200600024 (publication number ES 1 061 889) by the same applicants describes a machine for the repair of tyres, specifically, for the hot repair of tyres of industrial vehicles, comprising moulds adapted to the tyre profile, technically reinforcement, as well as retention means for the tyre and means for opening it to insert the repair elements, the machine of this patent constituting a frame having an upper bed plate and a stationary vertical support, with a pair of moulds with great resistance to heat, one in a vertical position and the other in a horizontal position, forming a type of dihedral angle that ,in relation to its edge, or dihedral, incorporates a hollow that is able to receive a complementary replaceable nozzle that completes the profile of the mould such that with a small number of nozzles the moulds may be adapted to a large majority of the tyres of industrial vehicles on the market.

In addition to the stationary support, the machine also has a mobile support opposite the stationary support, such that the mobile support, through its movement, allows the tyre to be adjusted and moved into the correct position for it to be repaired.

The machine also includes an upper tensioning bridge in a horizontal position that has the means for driving the repair lug into the tread of the tyre.

### DESCRIPTION OF THE INVENTION

The machine of this invention is based on the characteristics of the machine in the utility model (publication number ES 1 061 889) referred to in the previous section, and has a series of innovations that provide new features and advantages.

More specifically, one of the improvements is that it incorporates a mould that can move both upwards and downwards and can also pivot, comprising a replaceable shell to repair the bead of any type of tyre.

Another improvement is that the removable support has a push element that can pivot and be actuated by a hydraulic cylinder to hold and press the tyre against the mould of the stationary support.

Another improvement consists of the fact that the moulds of the bed plate are formed in sections, or by various consecutive elements, with a concave surface to adapt to the tread of the tyre and to the sidewall of the tyre.

Another improvement consists of the fact that the upper tensioning bridge has a runner with screws to push and drive the repair lug into the tread of the tyre.

Likewise, another novelty of the invention is the fact that the removable support is actuated by horizontal hydraulic cylinders located on the lower side of the machine, while the upper tensioning bridge is actuated to move in an upward or downward motion by means of vertical hydraulic cylinders.

Moreover, the machine is complemented by electric and pneumatic power corresponding to the heating pads and pneumatic bags, the power being transferred through cables and flexible tubes that are connected to the respective outlets by means of plugs and/or quick couplers.

Furthermore, the machine includes one or more control panels through which the machine's operations are controlled, as well as a central panel with a state-of-the-art touch screen to control the different independent temperature sensors to optimise the repair, both on the outside of the moulds as well as on the inside with a heated surface.

The machine is also complemented by a CPU that projects different graphs and numeric digits onto the screen during the repair, such as the temperatures of the moulds and the heating pads, etc., to guarantee the best possible repair for the tyre, also offering other possibilities for the screen, such as the extraction of data and graphs of the entire repair of the tyre, with a USB port that, incorporated into the main control panel, allows the user to modify the language, date, time, temperatures, repair times and the selection of the moulds that are going to be used in each repair, also providing a visual display of the alarms.

### DESCRIPTION OF THE DRAWINGS

To complement the description of the invention, and for the purpose of helping to make its characteristics more readily understandable, the present specification is accompanied by a set of figures constituting an integral part of the same, which by way of illustration and not limitation represent the following:
Figure 1.- Shows a representation corresponding to a general viewpoint of the machine of the invention.
Figures 2.- Shows another perspective view of the same machine, but in this case from a different perspective.

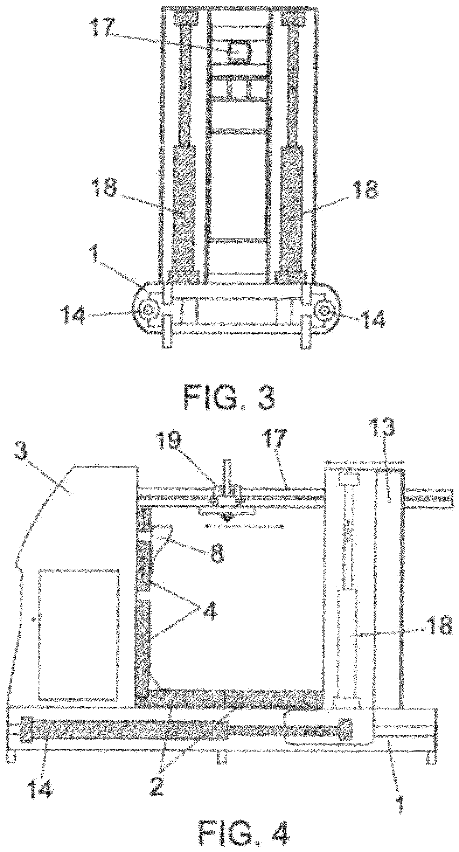

Figure 3.- Shows a cross-sectional back view of the machine represented in the previous figures.
Figure 4.- Shows a cross-sectional side view of the same machine.
Figure 5.- Shows detailed view of the assembly, arrangement and functionality of the independent mould constituting a shell for repairing the bead of the tyre.
Figure 6.- Shows a detailed perspective view of the runner mounted on the upper tensioning bridge of the machine.
Figure 7.- Shows, lastly, a front view of the main control panel for hydraulic and pneumatic control of the machine, with quick plugs for the interior heating pads.

### PREFERRED EMBODIMENT OF THE INVENTION

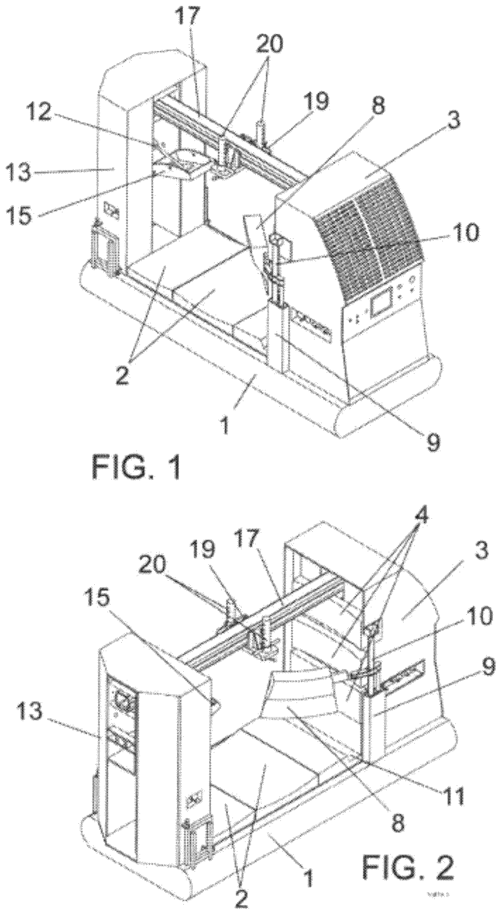

As can be seen in the figures referred to above, the machine of the invention comprises a general frame (1) which has a horizontal bed plate on which there are a series of moulds (2) and a stationary vertical support (3) on which the moulds (4) are placed, such that both the moulds (2) and the moulds (4) are formed by sections, or consecutive parts with the proper surface, meaning a relatively curve and concave surface to adapt to both the tread and one of the sidewalls of the tyre that is to be repaired. Shown clearly in figure 2, is the arrangement of the different sections or elements that constitute the moulds (2) and (4), the former in a horizontal position and the latter in a vertical position, and the moulds mounted on the stationary support (3), the horizontal moulds (2) arranged on the horizontal bed plate in the machine's frame (1).

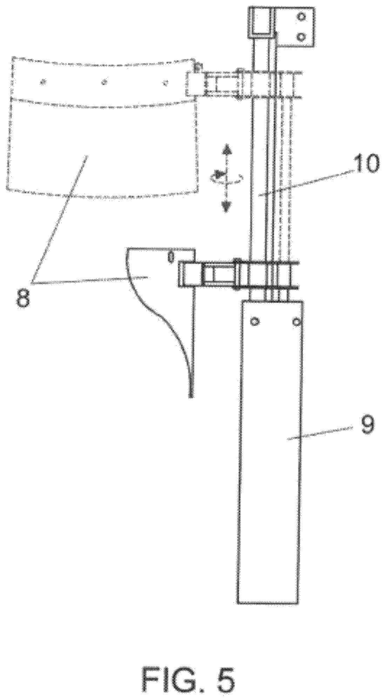

The machine also has an independent mould (8) to repair the bead of the tyre, whose independent mould (8) forms a shell that has an upward or downward motion, can pivot, as shown in figure 5, and be actuated by a hydraulic cylinder (9), moving along a vertical axis (10).

This independent mould, or shell (8), is located in an area that corresponds to one of the sides of the stationary support (3).

At the dihedral where the horizontal mould (2) and the vertical mould (4) meet, there is a hollow (11) to locate the different types of shells (12), in order to adapt them to the different types of tyres that need to be repaired.

Opposite the stationary support (3) is a removable support (13) whose movement is actuated by hydraulic cylinders (14), such that the movement in one direction or another of this removable support (13) adjusts and pushes the other side of the tyre previously placed between the moulds (2) and (4) on the bed plate and the stationary support (3).

On this removable support (13) there is a push element (15) actuated by a hydraulic cylinder (15), which applies pressure and pushes the opposite side of the tyre to move it to the other side, supported by the mould (4) or sections of the vertical mould (4) in the stationary support (3).

In the centre of the moulds previously referred to, electrical resistance is appropriately distributed to heat such moulds in an controlled and even way, since the replaceable shells (12) allow the machine to be used to repair different types of tyres.

The moulds shall preferably be metallic, such as aluminium, or a similar material.

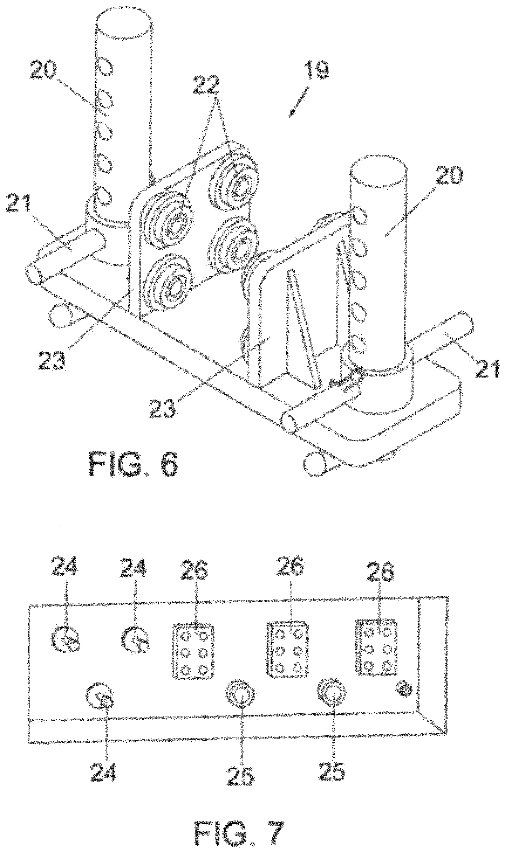

Between the stationary supports (3) and the removable supports (13) there is a tensioning bridge (17), disposed horizontally, meaning parallel to the bed plate that corresponds to the frame (1), the bridge (17) being actuated by hydraulic cylinders (18) to move it in an upward or downward motion, with the unique feature that said tensioning bridge (17) has a runner (19), using screws, for example, that works perpendicularly to the bridge (17), with the goal of applying pressure and immobilising the lug for repairing the inside of the tyre, meaning the tread of the tyre, showing in figure 6 ball screws (20) corresponding to said runner (19), as well as the bolts (21) to fasten such screws or clamp screw (20) and plates (23) for the opposite pressure elements (22).

Figure 7 shows the main control panel with the outlets (25) for connecting the flexible cables or tubes that power the corresponding pneumatic bags for the adjustment of the tyre, likewise showing the switches (24) for actuating the different hydraulic cylinders previously referred to, and other outlets (26) for supplying electric power to other elements that form part of the machine.

In accordance with the characteristics herein referred to, the functioning of the machine is as follows: After selecting and placing the correct shell (12) between the moulds (2) and (4), as well as the shell (8), the tyre having the correct form and dimensions for the repair to be done, it is placed between moulds (2) and (4), the tread of the tyre on the lower and horizontal sections (2) and the sidewall of the tyre against the vertical sections of the mould (4), with the subsequent actuation of the removable support (13) to move it towards the stationary support (3) where the aforementioned moulds are located, such that the removable mould (13) is actuated by means of the hydraulic cylinders (14), all of which is actuated by the switches (24) on the control panel shown in figure 7.

Likewise, the tensioning bridge (17) is placed in the proper position according to the measurements of the tyre that needs to be repaired, and the bags and heating pads are later placed in such a way that, through the runner (19) and screws (20) of the runner, they exert pressure and immobilise the corresponding repair lug in the inside of the tyre, specifically in the area of the tread of the tyre that needs to be repaired. Once the tyre is immobilised, the vulcanization time is set, as well as the temperatures of the heated moulds and the heating pads, connecting the resistance of the moulds and the heating pads, as well as the pneumatic bags, regulating the temperature and pressure according to each tyre's characteristics, in relation to the materials with which it was formed, taking into account that the dimensions of the repair lug and the rigidity of the tyre need to match.

By actuating the switches in the control panel shown in figure 7, the operation may be initiated, and it may be finalised by automatically disconnecting the machine.

## Claims

1. A machine for the hot repair of tyres, comprising a frame (1) having a bed plate and a stationary support (3) established therein, further incorporating a removable support (13) opposite the stationary support (3) to apply pressure and adapt the tyre to the correct position for the repair, further including an upper tensioning bridge (17) that has both upward and downward motion, providing the means to mount and insert the respective repair lug into the tread of the tyre, **characterized in that** it comprises an independent mould forming a replaceable shell (8) to repair the bead of any type of tyre, said shell (8) being connected to a hydraulic cylinder (9) in order to carry out an upward or downward motion, and in order to pivot it on a vertical axis (10), allowing for the precise placement and adaptation of the respective tyre; it having been provided that the support is associated with a push element (15), actuated by a pneumatic or hydraulic cylinder (16) to hold and fasten the tyre against the mould (4) of the stationary support (3).

2. The machine for the hot repair of tyres, according to claim 1, **characterised in that** the moulds (2) of the bed plate and (4) of the stationary support (3) are made up of various consecutive elements with a concave surface to adapt to the tread of the tyre and the sidewall of the tire, respectively.

3. The machine for the hot repair of tyres, according to claim 1, **characterised in that** the tensioning bridge (17), located in the upper portion of the machine, has a runner (19) with screws, or clamp screws (20), to push and hold the repair lug on the tread of the tyre.

4. The machine for the hot repair of tyres, according to the preceding claims, **characterised in that** the removable support (13) is actuated by horizontal hydraulic cylinders, arranged on the tensioning bridge (17), while said tensioning bridge (17) is, in turn, actuated in an upwards and downwards motion by means of vertical hydraulic cylinders (18).

5. The machine for the hot repair of tyres, according to the preceding claims, **characterised in that** in addition to the secondary control panels, it includes a main control panel, with outlets (25) for electric power supply, as well as switches (24) to activate the different components that make up the machine.

## Patentansprüche

1. Eine Maschine zur Heißreparatur von Reifen mit einem Rahmen (1), der eine Grundplatte und einen feststehenden Träger (3) aufweist, der in demselben eingerichtet ist, ferner mit einem entfernbaren Träger (13) gegenüber von dem feststehenden Träger (3) zum Ausüben von Druck und Anpassen des Reifens in die korrekte Position zur Reparatur, außerdem mit einer oberen Spannbrücke (17), die sowohl eine Aufwärts- als auch eine Abwärtsbewegung aufweist, die die Einrichtung zum Befestigen und Einführen des jeweiligen Reparaturansatzes in die Lauffläche des Reifens bereitstellt, **dadurch gekennzeichnet, dass** dieselbe eine unabhängige Form aufweist, die eine austauschbare Schale (8) zur Reparatur des Wulstes eines beliebigen Typs Reifen bildet, wobei die Schale (8) mit einem hydraulischen Zylinder (9) verbunden ist, um eine Aufwärts- oder Abwärtsbewegung auszuführen, und um dieselbe an einer vertikalen Achse (10) zu schwenken, was die präzise Platzierung und Anpassung des jeweiligen Reifens erlaubt; wobei vorgesehen wurde, dass der Träger einem Druckelement (15) zugeordnet ist, das durch einen pneumatischen oder hydraulischen Zylinder (16) betätigt wird, um den Reifen gegenüber der Form (4) des feststehenden Trägers (3) zu halten und zu befestigen.

2. Die Maschine zur Heißreparatur von Reifen gemäß Anspruch 1, die **dadurch gekennzeichnet ist, dass** die Formen (2) der Grundplatte und (4) des feststehenden Trägers (3) aus verschiedenen aufeinanderfolgenden Elementen mit einer konkaven Oberfläche zur Anpassung an die Lauffläche des Reifens bzw. die Seitenwand des Reifens aufgebaut sind.

3. Die Maschine zur Heißreparatur von Reifen gemäß Anspruch 1, die **dadurch gekennzeichnet ist, dass** die Spannbrücke (17), die sich in dem oberen Abschnitt der Maschine befindet, einen Läufer (19) mit Schrauben oder Klemmschrauben (20) zum Drücken und Halten des Reparaturansatzes an der Lauffläche des Reifens aufweist.

4. Die Maschine zur Heißreparatur von Reifen gemäß den vorherigen Ansprüchen, die **dadurch gekennzeichnet ist, dass** der entfernbare Träger (13) durch horizontale hydraulische Zylinder betätigt wird, die an der Spannbrücke (17) angeordnet sind, während die Spannbrücke (17) wiederum in einer Aufwärts- und Abwärtsbewegung mittels vertikaler hydraulischer Zylinder (18) betätigt wird.

5. Die Maschine zur Heißreparatur von Reifen gemäß den vorherigen Ansprüchen, die **dadurch gekennzeichnet ist, dass** diese zusätzlich zu den sekundären Steuertafeln eine Hauptsteuertafel mit Auslässen (25) zur elektrischen Leistungsversorgung sowie Schaltern (24) zur Aktivierung der unterschiedlichen Komponenten, die die Maschine bilden, aufweist.

## Revendications

1. Machine pour la réparation à chaud de pneus, comprenant un châssis (1) ayant une plaque de base et un support fixe (3) positionné dans celui-ci, incorporant en outre un support amovible (13) opposé au support fixe (3) pour appliquer une pression et adapter le pneu à la position correcte pour la réparation, comprenant en outre un pont de tension supérieur (17) qui a à la fois un mouvement vers le haut et vers le bas, fournissant les moyens pour monter et insérer la patte de réparation respective dans la bande de roulement du pneu, **caractérisée en ce qu'**elle comprend un moule indépendant formant une coquille remplaçable (8) pour réparer la tringle de tout type de pneu, ladite coquille (8) étant reliée à un vérin hydraulique (9) pour effectuer un mouvement vers le haut ou vers le bas, et pour la faire pivoter sur un axe vertical (10), permettant le placement et l'adaptation précise du pneu respectif ; étant prévu que le support est associé à un élément poussoir (15), actionné par un vérin pneumatique ou hydraulique (16) pour maintenir et fixer le pneu contre le moule (4) du support fixe (3).

2. Machine pour la réparation à chaud de pneus, selon la revendication 1, **caractérisée en ce que** les moules (2) de la plaque de base et (4) du support fixe (3) sont constitués de divers éléments consécutifs avec une surface concave pour s'adapter respectivement à la bande de roulement du pneu et à la paroi latérale du pneu.

3. Machine pour la réparation à chaud de pneus, selon la revendication 1, **caractérisée en ce que** le pont de tension (17), situé dans la partie supérieure de la machine, comporte une glissière (19) avec des vis, ou des vis de serrage (20), pour pousser et maintenir la patte de réparation sur la bande de roulement du pneumatique.

4. Machine pour la réparation à chaud de pneus, selon les revendications précédentes, **caractérisée en ce que** le support amovible (13) est actionné par des vérins hydrauliques horizontaux, disposés sur le pont de tension (17), tandis que ledit pont de tension (17) est, à son tour, actionné vers le haut et vers le bas au moyen de vérins hydrauliques verticaux (18).

5. Machine pour la réparation à chaud de pneus, selon les revendications précédentes, **caractérisée en ce qu'**elle comprend, en plus des tableaux de commande secondaires, un tableau de commande principal, avec des prises (25) pour l'alimentation électrique, ainsi que des interrupteurs (24) pour activer les différents composants qui composent la machine.
